# EUROPEAN PATENT SPECIFICATION

(11) **EP 1 451 055 B1**
(45) Date of publication and mention of the grant of the patent: **01.08.2007**
(21) Application number: 02804370.1
(22) Date of filing: 03.12.2002
(51) Int. Cl.: B62D 1/06

(54) **A STEERING WHEEL PROVIDED WITH A DEVICE FOR HEATING OR COOLING THE RIM OF SAID STEERING WHEEL**
LENKRAND MIT EINER VORRICHTUNG ZUM HEIZEN ODER KÜHLEN DES RANDS DES LENKRADS
ROUE DIRECTRICE POURVUE D'UN DISPOSITIF SERVANT A CHAUFFER OU A REFROIDIR LA JANTE DE LADITE ROUE

(30) Priority: 05.12.2001 GB 0129107
(43) Date of publication of application: 01.09.2004
(73) Proprietor: AUTOLIV DEVELOPMENT AB, 447 83 Vargarda (SE)
(72) Inventor: TARTE, Frédéric, F-86580 Biard (FR)
(74) Representative: Parry, Simon James
(86) International application number: PCT/SE2002/002213
(87) International publication number: WO 2003/047942

(56) References cited:
- WO-A1-01/28842
- DE-A1- 19 935 862
- US-A- 4 640 340
- US-A- 5 850 741

## Description

**THE PRESENT INVENTION** relates to a steering wheel, and more particularly relates to a steering wheel for a motor vehicle, such as a motor car.

In many countries, during at least the summer months of the year, the steering wheel of a car which is parked outdoors may become extremely hot. A hot steering wheel is difficult to hold, and it is therefore dangerous to drive whilst the steering wheel is hot. A corresponding problem may be found in cold climates where it is equally dangerous to drive a motor vehicle with a very cold steering wheel.

It can take rather a long time for the temperature of the steering wheel to be changed substantially by use of the heating or air-conditioning system normally provided within a motor vehicle. It has been proposed to provide a steering wheel with electric heating wires, and these may be used to heat a cold steering wheel but cannot be used satisfactorily to cool a hot steering wheel.

The present invention seeks to provide an improved steering wheel.

According to this invention there is provided a steering wheel, the steering wheel comprising a central hub connected by at least one spoke to a rim, the hub incorporating a heat exchanger element, the heat exchanger element being adapted to be cooled, there being at least one heat pipe extending, as part of a spoke, from the heat exchanger to the rim of the steering wheel, see e.g. US-A-5 850 741. The invention is characterised by there being two further heat pipes present within the rim each in thermal contact with a heat pipe present in the spoke, each of the said heat pipes in the rim extending substantially halfway round the rim, wherein the heat exchanger is provided with a recess to receive a heater.

Preferably there are a plurality of spokes which incorporate heat pipes.

Conveniently the steering wheel has a plurality of spokes which each comprise two substantially parallel heat pipes.

Preferably the or each heat pipe in a spoke is connected to at least one heat pipe in the rim by means of a thermal contact block formed of a material of high thermal conductivity.

Conveniently a portion of the rim of the steering wheel is provided with at least one portion to engage a heater.

In a preferred embodiment at least one said thermal contact block is provided with a recess to receive a heater.

The heater may be an electric heater or may be part of a heat pump arrangement.

Preferably the heat exchanger is provided with a plurality of fins to dissipate heat.

Conveniently the steering wheel is provided with at least one Peltier effect element to assist in cooling the wheel.

Advantageously the heat exchanger is provided with a plurality of Peltier effect elements.

In one embodiment at least one heat pipe that forms part of a spoke is provided with a Peltier effect element.

In order that the invention may be more readily understood, and so that further features thereof may be appreciated, the invention will now be described, by way of example, with reference to the accompanying drawings in which:
FIGURE 1 is a front view of a steering wheel in accordance with the invention,
FIGURE 2 is a rear view of the steering wheel of Figure 1,
FIGURE 3 is a view of some components of the steering wheel of Figure 1, with other components being omitted for the sake of explanation,
FIGURE 4 is a diagrammatic enlarged view of part of a steering wheel in accordance with the invention, again with parts omitted for the sake of clarity of illustration,
FIGURE 5 is a perspective view of part of a steering wheel of another arrangement illustrating a recess to receive a heater,
FIGURE 6 is a view corresponding to Figure 5 illustrating a heater being inserted in position,
FIGURE 7 is a diagrammatic perspective view of a heat exchanger element, the heat exchanger element incorporating Peltier effect elements, and
FIGURE 8 is a diagrammatic view of a further form of steering wheel incorporating Peltier effect elements.

It is to be appreciated that in the present invention use is made of "heat pipes". Heat pipes have been proposed before and are elongate pipes which can be used to facilitate the rapid transfer of heat. A typical heat pipe comprises an elongate tube formed of metal such as aluminium or copper. The interior of the tube contains an elongate wick which extends from one end of the tube to the other. The wick may be mounted on the inner wall of the pipe. The pipe contains a quantity of a volatile fluid such as water, acetone, ethanol or methanol. The pipe is maintained with an internal pressure which is substantially below atmospheric pressure. If one end region of the pipe is heated, the liquid within the pipe will vaporise within that region and will then move, in the gaseous phase, towards the other end of the pipe. As the vapour become cooled, the vapour will condense. The vapour will again turn into liquid, and the liquid will be transported by gravity and/or by a wicking action provided by the wick back to the heated end of the pipe. It is to be appreciated that heat will be absorbed, due to the latent heat of vaporisation, at the heated end of the pipe, and heat will be emitted, due to the reclamation of the heat of vaporisation as the vapour condenses, at the point in the heat pipe at which the vapour condenses. Heat can be very quickly transported from one end of a heat pipe to the other with very little loss of heat during transport. Heat pipes of this type have been proposed previously and are know to the man skilled in the art.

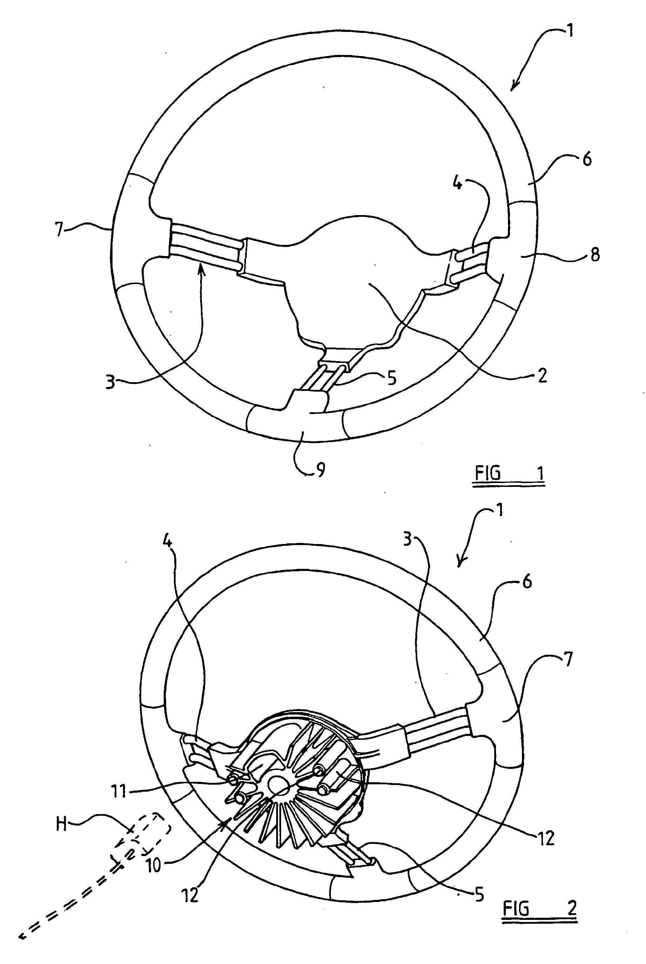

Figure 1 illustrates a steering wheel 1 in accordance with the invention. The steering wheel includes a hub 2 which is connected by three generally radially extending spokes 3, 4, 5 to a rim 6. The spokes are each connected to the rim by a respective connector 7, 8, 9.

As can be seen from Figure 2, the underside of the hub 2 is provided with a heat exchanger block 10 formed of an appropriate metal casting, the heat exchanger block having a plurality of heat dissipating fins. The heat exchanger block 10 additionally comprises a cavity 11 adapted to receive a wire harness or an electrically operated heater. Figure 2 shows in phantom an electric heater H configured to be inserted into the recess 11. The heat exchanger also defines bores 12 to receive the end parts of heat pipes. The heat exchanger block may be secured to part of the hub, or may be formed integrally with the hub.

Alternatively the cavity 11 may receive part of a heat pump arrangement which can pump thermal energy into or away from the heat exchanger block 10.

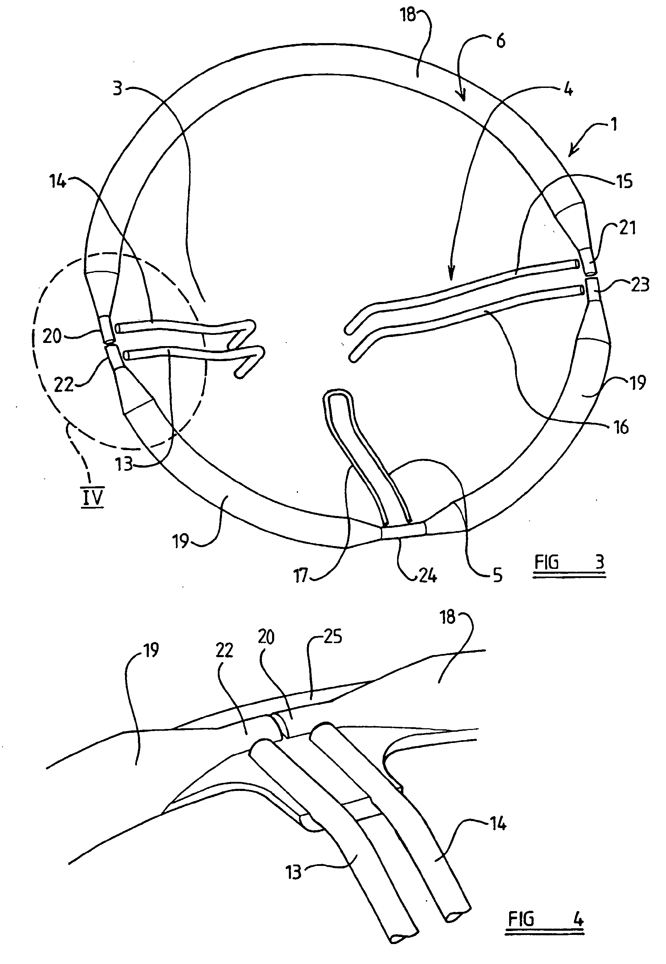

Referring now to Figure 3, the spoke 3 is constituted by two parallel heat pipes 13, 14 and the spoke 4 is constituted by two parallel heat pipes 15, 16. The radially inner-most ends of the heat pipes are cranked to be received within the bores 12 to be in thermal contact with the heat exchanger block 10. The spoke 5 is simply constituted by a "U"-shaped wire 17.

The core of the rim 6 of the steering wheel 1 is constituted by two heat pipes, each of which extends substantially halfway round the rim, thus a first heat pipe 18 extends from the radially outer end of the spoke 3 to the radially outer end of the spoke 4 and a second heat pipe 19 extends from the radially outer end of the spoke 3, past the end of the spoke 5, to the radially outer end of the spoke 4. The combination of the two heat pipes 18, 19 extends all of the way around the rim 6 of the steering wheel.

The heat pipe 18 is provided with opposed ends 20, 21 which are of relatively narrow diameter. The heat pipe 19 is also provided with opposed ends 22, 23 of relatively narrow diameter, and the heat pipe 19 is provided with a central "waisted" region 24 of relatively narrow diameter. The heat pipe 19 may be divided into two separate heat pipes at this point, with the central "waisted" region preventing communication between the two halves of the heat pipe 19.

As can be seen in Figure 4, the connector 7 incorporates a metal casting 25, formed of aluminium or copper, which receives the ends of the heat pipe 13, 14, and which also receives the narrow diameter ends 20, 22 of the heat pipes 18, 19. A similar casting, which is a mirror image to the casting 25, is sandwiched together with the casting 25 to form the connector 7, thus ensuring that the described components are firmly held together and are all in excellent thermal contact with each other.

It is to be appreciated that if the rim of the steering wheel is cold, the electric heater H within the recess 11 may be operated, thus heating the heat exchanger block 10. Heat will rapidly be transferred by the conductive metal forming the heat exchanger to the bores 12, and thus to the deflected ends of the heat pipes 13, 14, 15, 16. Heat will rapidly be transmitted by these heat pipes to the castings 25 where the heat is transmitted to the ends of the heat pipes 18 and 19. Heat will thus rapidly be transmitted around the entire rim of the steering wheel.

If the rim of the steering wheel is hot, cooling air may be blown past the fins of the heat exchanger block 10, thus cooling the heat exchanger block. Thus the ends of the heat pipes 13, 14, 15, 16 received within the bores 12 will be cooled. The temperature of these ends of the heat pipes 13, 14, 15, 16 will cool. The thermal energy stored in the rim of the steering wheel will heat the pipes 18 and 19 which will heat the radially outer ends of the pipes 13, 14, 15, 16. The thermal energy will be transferred to the heat exchange block 10, and thus the temperature of the rim of the wheel will drop.

It is to be appreciated, therefore, that when the described steering wheel is to be used in a motor vehicle, a heater such as an electric heater is provided to be received within the chamber 11, and also appropriate air ducting is provided to blow cool air on to the heat exchanger 10, such as air from the air conditioning system of the vehicle.

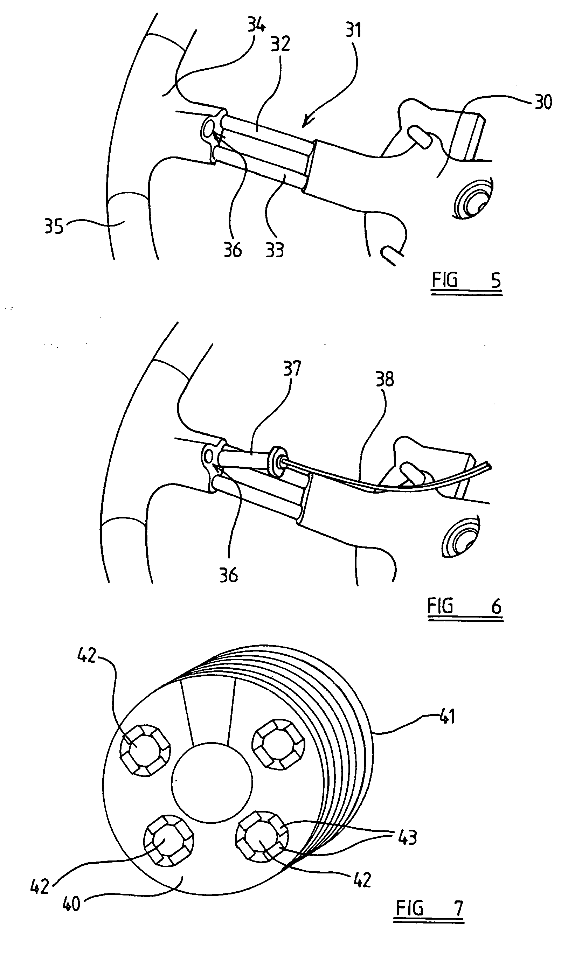

Whilst the described embodiment of the invention is a steering wheel where a heat exchanger block provided in the hub is designed to be both heated and cooled, in an alternative arrangement, which will now be described with reference to Figures 5 and 6, the heat exchanger block may be configured simply to be cooled, and, if the rim of the steering wheel is to be heated, separate heating elements which engage a portion of the rim of the steering wheel may be utilised.

Referring initially to Figure 5, part of the steering wheel is illustrated. The illustrated steering wheel has a hub 30 which incorporates a heat exchanger block 10 of the type described above which is configured to provide a cooling effect. The steering wheel incorporates two spokes 31, only one of which is shown, each spoke being constituted by two heat pipes 32, 33. The heat pipes 32, 33 extend from the heat exchanger in the hub 30 to a connector 34. The connector 34 serves to connect the spoke 31 to the rim 35. Two heat pipes are contained within the rim 35, each extending substantially halfway round the rim. Each heat pipe is in contact with at least one of the connectors 34. Each connector 34 has two thermally conductive castings equivalent to the casting 25 described above with reference to Figure 4. However, as can be seen from Figure 5, the uppermost casting defines an additional cylindrical recess 36 accessible from the exterior of the connector. The cylindrical recess 36 is dimensioned to accommodate an electric heater 37 of cylindrical form, as can be seen in Figure 6. The heater 37, which is associated with a wire 38, is simply inserted into the cylindrical recess 36 provided in the connector 34. When it is desired to heat the rim of the steering wheel electrical energy is supplied to the heater 37 through the wire 38. Heat is passed directly to the thermally conductive casting which defines the recess 36 and which forms part of the connector 34. Heat is thus applied directly to the heat pipes within the rim 35 that are in contact with the connector 34, thus effecting a heating of the steering wheel rim.

It is to be appreciated, therefore, that in the arrangement of Figures 5 and 6 the heat exchanger element provided on the hub 30 the steering wheel will provide any desired cooling effect, whilst heater elements received within recesses provided on connectors connecting the spokes to the rim will provide any desired heating effect.

In the above described arrangements, the cooling of the heat exchanger element is effected through the heat dissipating fins that constitute a major part of the exterior surface of the heat exchanger block.

It has been found that the heat dissipating ability of the heat exchanger block may be improved if the heat exchanger block is provided additionally with one or more Peltier effect devices. Peltier effect devices are known devices which exhibit the effect that if an electrical potential is applied to the device the temperature of one face of the Peltier effect device will rise whilst the temperature of the other face will fall.

Figure 7 illustrates a heat exchanger element 40 which may be used in place of the heat exchanger element 11 illustrated above. The heat exchanger element 40 is provided with a plurality of disc-like spaced apart heat radiating fins 41. The heat exchanger element 40 is provided with bores 42 to receive the ends of heat pipes such as the heat pipes in the spokes of a steering wheel of the type described above. Adjacent the end of each bore 42 are a plurality of Peltier effect devices 43.

On operation of the Peltier devices, the exposed face of each device, that is the face of the device directed away from the heat exchanger block 40, becomes heated, whereas the face of the Peltier effect device in thermal contact with the heat exchanger block 40 becomes cooled. The heated outermost faces of the Peltier devices are capable of dissipating heat at a relatively high rate, thus enhancing the overall cooling effect.

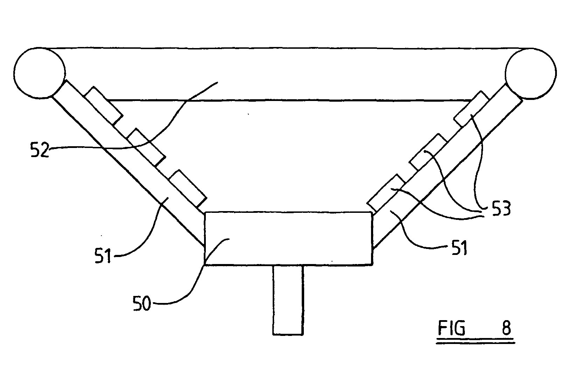

Whilst Figure 7 illustrates Peltier devices provided on the heat exchanger element 40, in a modified embodiment of the invention, shown schematically in Figure 8, Peltier effect devices are provided in a different location.

Referring to Figure 8 a steering wheel has a hub 50 provided with a heater exchanger element, the heat exchanger element being associated with spokes 51 formed of heat pipes, the heat pipes of the spokes being in thermal contact with two substantially semicircular heat pipes contained within the rim 52 of the steering wheel. As shown in Figure 8 the heat pipes 51 forming the spokes of the device are each provided with a plurality of Peltier effect devices 53. When the rim of the steering wheel is to be cooled the Peltier effect devices are actuated, in such a way that the relatively cold faces of the Peltier effect devices are the faces in contact with the heat pipes 51 constituting the spokes of a steering wheel. In this way heat may be swiftly dissipated from the steering wheel to provide the desired cooling effect.

In the present Specification "comprise" means "includes or consists of" and "comprising" means "including or consisting of".

## Claims

1. A steering wheel the steering wheel (1) comprising a central hub (2) connected by at least one spoke (3) to a rim (6), the hub (2) incorporating a heat exchanger element (10), the heat exchanger element (10) being adapted to be cooled, there being at least one heat pipe (13) extending, as part of a spoke (3), from the heat exchanger (10) to the rim (6) of the steering wheel, **characterised by** there being two further heat pipes (18, 19) present within the rim (6) each in thermal contact with the heat pipe (13) present in the spoke (3), each of the said heat pipes (18, 19) in the rim extending substantially hallway round the rim (6), and wherein the heat exchanger (10) is provided with a recess (11) to receive a heater (H).

2. A steering wheel according to Claim 1 wherein there are a plurality of spokes (3, 4) which incorporate heat pipes (13, 14, 15, 16).

3. A steering wheel according to Claim 2 wherein the steering wheel (1) has a plurality of spokes (3, 4) which each comprise two substantially parallel heat pipes (13, 14, 15, 16).

4. A steering wheel arrangement according to any one of the preceding Claims wherein the heat pipe (13, 14, 15, 16) in a spoke is connected to at least one heat pipe (18, 19) in the rim (6) by a means of a thermal contact block (25) formed of a material of high thermal conductivity.

5. A steering wheel according to any one of the preceding Claims wherein the heat exchanger (10) is provided with a plurality of fins to dissipate heat.

## Patentansprüche

1. Lenkrad, wobei das Lenkrad (1) eine zentrale Nabe (2) umfasst, die durch mindestens eine Speiche (3) mit einem Kranz (6) verbunden ist, wobei die Nabe (2) ein Wärmetauscherelement (10) enthält, wobei das Wärmetauscherelement (10) so ausgelegt ist, dass es abgekühlt werden kann, wobei es wenigstens ein Wärmeübertragungsrohr (13) gibt, das als Teil einer Speiche (3) von dem Wärmetauscher (10) zu dem Kranz (6) des Lenkrads verläuft, **dadurch gekennzeichnet, dass** es zwei weitere Wärmeubertragungsrohre (18, 19) gibt, die in dem Kranz (6) jeweils in Wärmekontakt mit dem in der Speiche (3) vorhandenen Wärmeübertragungsrohr (13) vorhanden sind, wobei jedes der Wärmeübertragungsrohre (18, 19) in dem Kranz im Wesentlichen halb um den Kranz (6) verläuft und wobei der Wärmetauscher (10) mit einer Aussparung (11) versehen ist, um eine Heizeinrichtung (H) aufzunehmen.

2. Lenkrad nach Anspruch 1, bei dem es mehrere Speichen (3, 4) gibt, die Wärmeübertragungsrohre (13, 14, 15, 16) enthalten.

3. Lenkrad nach Anspruch 2, bei dem das Lenkrad (1) mehrere Speichen (3, 4) besitzt, die jeweils zwei im Wesentlichen parallele Wärmeübertragungsrohre (13, 14, 15, 16) umfassen,

4. Lenkradanordnung nach einem der vorangehenden Ansprüche, bei der das oder jedes Wärmeübertragungsrohr (13, 14, 15, 16) in einer Speiche mittels eines aus einem Werkstoff mit hoher Wärmeleitfähigkeit gebildeten Wärmekontaktblocks (25) mit wenigstens einem Wärmeübertragungsrohr (18, 19) In dem Kranz (6) verbunden ist.

5. Lenkrad nach einem der vorangehenden Ansprüche, bei dem der Wärmetauscher (10) mit mehreren Rippen zum Ableiten von Wärme versehen ist.

## Revendications

1. Volant de direction, le volant de direction (1) comprenant un moyeu central (2) raccordé par au moins une branche (3) à un tour (6), le moyeu (2) incorporant un élément d'échangeur de chaleur (10), l'élément d'échangeur de chaleur (10) étant adapté pour être refroidi, au moins un caloduc (13) s'étendant, faisant partie d'une branche (3), de l'échangeur de chaleur (10) au tour (6) du volant de direction, **caractérisé par** la présence de deux caloducs supplémentaires (18, 19) dans le tour (6), chacun en contact thermique avec le caloduc (13) présent dans la branche (3), chacun desdits caloducs (18, 19) dans le tour s'étendant sur sensiblement la moitié du tour (6), et dans lequel l'échangeur de chaleur (10) est doté d'un évidement (11) pour recevoir un dispositif de chauffage (H).

2. Volant de direction selon la revendication 1, dans lequel se trouve une pluralité de branches (3, 4) qui comprennent des caloducs (13, 14, 15, 16).

3. Volant de direction selon la revendication 2, dans lequel le volant de direction (1) comporte une pluralité de branches (3, 4) qui comprennent chacune deux caloducs sensiblement parallèles (13, 14, 15, 16).

4. Agencement de volant de direction selon l'une quelconque des revendications précédentes, dans lequel le ou chaque caloduc (13, 14, 15, 16) dans une branche est raccordé à au moins un caloduc (18, 19) dans le tour (6) au moyen d'un bloc de contact thermique (25) formé d'un matériau de conductivité thermique élevée.

5. Volant de direction selon l'une quelconque des revendications précédentes, dans lequel l'échangeur de chaleur (10) est doté d'une pluralité d'ailettes pour dissiper la chaleur.
